# EUROPEAN PATENT APPLICATION

(11) **EP 4 708 448 A1**
(43) Date of publication of application: **11.03.2026**
(21) Application number: 25749167.0
(22) Date of filing: 07.01.2025
(51) Int. Cl.: H01M 10/42, H01M 10/6557, H01M 10/6567, H01M 50/204, H01M 50/249, A62C 3/16, A62C 35/10, H01M 50/24

(54) **BATTERY MODULE, AND BATTERY PACK AND VEHICLE INCLUDING SAME**

(30) Priority: 02.02.2024 KR 20240016573; 20.09.2024 KR 20240127440
(71) Applicant: LG Energy Solution, Ltd., Seoul 07335 (KR)
(72) Inventor: LEE, Han-Young, Daejeon 34122 (KR); KANG, Jung-Woo, Daejeon 34122 (KR); LEE, Kyung-Min, Daejeon 34122 (KR); LEE, Su-Rim, Daejeon 34122 (KR); JUNG, Hye-Ran, Daejeon 34122 (KR)
(74) Representative: Plasseraud IP
(86) International application number: PCT/KR2025/000334
(87) International publication number: WO 2025/164984

(57) **Abstract**

Disclosed is a battery module, and a battery pack and a vehicle including the same. The battery module includes a battery cell stack in which a plurality of battery cells are stacked; a case in which the battery cell stack is accommodated; and a cooling member disposed between the plurality of battery cells, wherein the battery cells include a first battery cell having electrode leads respectively formed at both sides thereof, and a second battery cell having both electrode leads formed at one side thereof.

## Description

### TECHNICAL FIELD

This application is based on and claims priority from Korean Patent Application No. 10-2024-0016573, filed on February 2, 2024, and Korean Patent Application No. 10-2024-0127440, filed on September 20, 2024, with the Korean Intellectual Property Office, the disclosure of which is incorporated herein in its entirety by reference.

The present disclosure relates to a battery module, and a battery pack and a vehicle including the same, and more specifically, to a battery module capable of preventing propagation of flame, and a battery pack and a vehicle including the same.

### BACKGROUND ART

In general, a secondary battery refers to a battery that may be repeatedly charged and discharged, such as a lithium-ion battery, a lithium polymer battery, a nickel-cadmium battery, a nickel-hydrogen battery, or a nickel-zinc battery. A battery cell, which corresponds to the most basic secondary battery, may provide an output voltage of approximately 2.5 V to 4.2 V.

Recently, as these battery cells are applied to devices requiring high output voltage and large charging capacity, such as electric vehicles or ESS (Energy Storage Systems), a battery module configured by connecting a number of battery cells in series, parallel, or a combination of series and parallel, and a battery pack configured by connecting the battery modules again in series, parallel, or a combination of series and parallel, are widely used.

Lithium secondary batteries are currently in the spotlight due to their advantages such as high operating voltage and significantly high energy density. However, because they use organic electrolytes, overcharging of lithium secondary batteries may cause overcurrent and overheating, which may lead to explosion or ignition in severe cases.

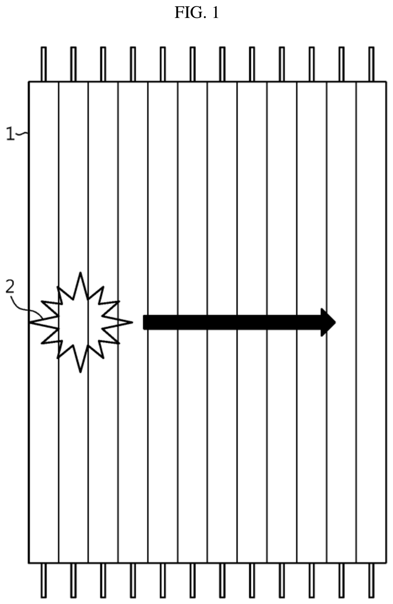

FIG. 1 is a drawing briefly showing the arrangement structure of battery cells accommodated in a conventional battery module, from which a case of the battery module is omitted.

Referring to FIG. 1, in the conventional battery cell 1, a plurality of battery cells 1 of the same type having the same length are arranged in the same direction. In this case, when a flame 2 occurs in one battery cell 1, the flame 2 easily propagates to another adjacent battery cell 1 (see arrows in FIG. 1).

Specifically, if a flame occurs in at least one of the battery cells inside the case of the battery module, the flame may spread to other battery cells, causing thermal runaway, which may result in a dangerous situation for the user.

For example, if a battery module or battery pack is installed in an electric vehicle and a flame occurs in the battery cell and the flame leaks outside, there is a problem that the driver of the electric vehicle may be burned or put in a dangerous situation.

Alternatively, if a flame generated from a random battery cell spreads to a neighboring battery cell, there is a problem in that the battery module or battery pack containing the battery cell may be damaged, be burned out, or explode due to a chain reaction of the flame, making it impossible to secure the stability of the battery module or battery pack.

### DISCLOSURE

### Technical Problem

Therefore, the present disclosure is directed to providing a battery module capable of blocking or extinguishing a flame ignited in a battery cell, and a battery pack and a vehicle including the same.

In addition, the present disclosure is directed to providing a battery module capable of preventing a flame generated by ignition in a battery cell from spreading to another neighboring battery cell, and a battery pack and a vehicle including the same.

In addition, the present disclosure is directed to providing a battery module capable of preventing heat propagation between battery cells, thereby preventing serial thermal runaway, and improving the stability of battery cells, and a battery pack and a vehicle including the same.

However, the technical problems to be solved by the present disclosure are not limited to the above, and other problems not mentioned herein will be clearly understood by those skilled in the art from the following description.

### Technical Solution

In one aspect of the present disclosure, there is provided a battery module comprising: a battery cell stack in which a plurality of battery cells are stacked; a case in which the battery cell stack is accommodated; and a cooling member disposed between the plurality of battery cells, wherein the battery cells include a first battery cell having electrode leads respectively formed at both sides thereof, and a second battery cell having both electrode leads formed at one side thereof.

In an embodiment, the battery cell stack may include: a first battery cell stack having a plurality of first battery cells stacked therein; a second battery cell stack arranged adjacent to the first battery cell stack and having a plurality of second battery cells stacked therein; and a third battery cell stack arranged adjacent to the second battery cell stack and having a plurality of first battery cells stacked therein.

In an embodiment, the cooling member may be disposed between the plurality of second battery cells of the second battery cell stack.

In an embodiment, the second battery cell provided in the second battery cell stack may be shorter than the first battery cell.

In an embodiment, a space may be formed between any second battery cell and another second battery cell.

In an embodiment, the cooling member may be disposed in the space.

In an embodiment, the cooling member may include an accommodation portion configured to rupture at a preset temperature; and a cooling material accommodated in the accommodation portion.

In an embodiment, the accommodation portion may be made of a metal material having a preset thickness.

In an embodiment, the cooling material may be liquid nitrogen.

In an embodiment, the plurality of first battery cells provided in the first battery cell stack and the plurality of second battery cells provided in the second battery cell stack may be arranged in different directions.

In an embodiment, the case may include a lower case, the plurality of first battery cells may be arranged so that a narrow side thereof among sides without electrode leads is in contact with the lower case, and the plurality of second battery cells may be arranged so that a wide side thereof among the sides without electrode leads faces the lower case.

In an embodiment, a space may be formed between any second battery cell and another second battery cell.

In an embodiment, the cooling member may be disposed in the space.

Meanwhile, according to another aspect of the present disclosure, there may be provided a battery pack including at least one battery module described above, and a vehicle including at least one battery module described above.

Meanwhile, in another aspect of the present disclosure, may be provided a battery pack comprising: a battery cell stack in which a plurality of battery cells are stacked; a pack housing in which the battery cell stack is accommodated; and a cooling member disposed between the plurality of battery cells, wherein the battery cells include a first battery cell having electrode leads respectively formed at both sides thereof, and a second battery cell having both electrode leads formed at one side thereof.

Meanwhile, according to another aspect of the present disclosure, there may be provided a vehicle including at least one battery pack described above.

### Advantageous Effects

The embodiments of the present disclosure have the effect of blocking or extinguishing a flame ignited in a battery cell.

In addition, the present disclosure has the effect of preventing a flame generated by ignition in a battery cell from spreading to other neighboring battery cells.

In addition, the present disclosure has the effect of preventing heat propagation between battery cells, thereby preventing serial thermal runaway and improving the stability of battery cells.

The accompanying drawings illustrate a preferred embodiment of the present disclosure and together with the foregoing disclosure, serve to provide further understanding of the technical features of the present disclosure, and thus, the present disclosure is not construed as being limited to the drawing.

### DESCRIPTION OF DRAWINGS

The accompanying drawings illustrate a preferred embodiment of the present disclosure and together with the foregoing disclosure, serve to provide further understanding of the technical features of the present disclosure, and thus, the present disclosure is not construed as being limited to the drawing.
FIG. 1 is a drawing briefly showing the arrangement structure of battery cells accommodated in a conventional battery module, from which a case of the battery module is omitted.
FIG. 2 is a schematic perspective view showing a battery module according to the first embodiment of the present disclosure.
FIG. 3 is a top view showing only a battery cell in the battery module according to the first embodiment of the present disclosure.
FIG. 4 is a front view showing only the battery cell in the battery module according to the first embodiment of the present disclosure, viewed along the A direction of FIG. 3.
FIG. 5 is a cross-sectional view taken along the B-B' direction of FIG. 4.
FIG. 6 is a diagram viewed along the C direction of FIG. 4.
FIG. 7 is a top view showing only the battery cell in a battery module according to the second embodiment of the present disclosure.
FIG. 8 is a diagram viewed along the D direction of FIG. 7, in which a lower case is depicted.
FIG. 9 is a drawing schematically showing the configuration of a battery pack according to each embodiment of the present disclosure.
FIG. 10 is a drawing for explaining a vehicle including the battery pack of FIG. 9.
FIG. 11 is a drawing schematically showing the configuration of a battery pack according to another embodiment of the present disclosure.
FIG. 12 is a drawing for explaining a vehicle including the battery pack of FIG. 11.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation. Therefore, the description proposed herein is just a preferable example for the purpose of illustrations only, not intended to limit the scope of the disclosure, so it should be understood that other equivalents and modifications could be made thereto without departing from the scope of the disclosure.

In the drawings, the size of each component or a specific portion constituting the component is exaggerated, omitted, or schematically illustrated for convenience and clarity of description. Therefore, the size of each component does not fully reflect the actual size. If it is determined that a detailed description of a related known function or configuration may unnecessarily obscure the gist of the present disclosure, such a description will be omitted.

As used herein, the term 'coupling' or 'connection' refers to not only a case where one member and another member are directly coupled or directly connected, but also a case where one member is indirectly coupled or indirectly connected to another member through a joint member.

The present disclosure may be implemented by independently performing the following embodiments. Furthermore, the present disclosure may be implemented by combining two or more of the following embodiments. The following embodiments may be implemented independently or may also be freely combined with each other.

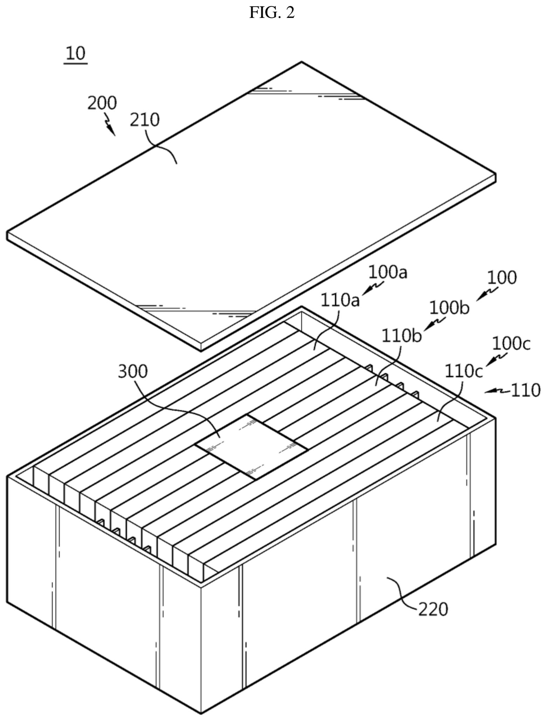

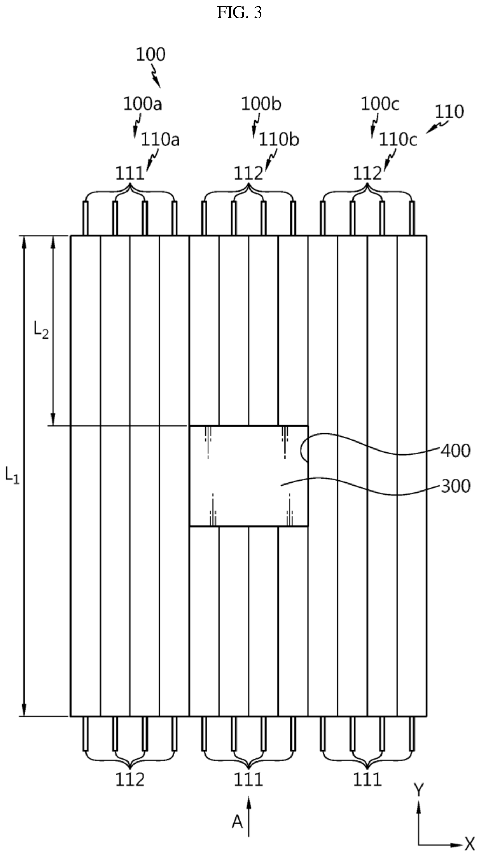

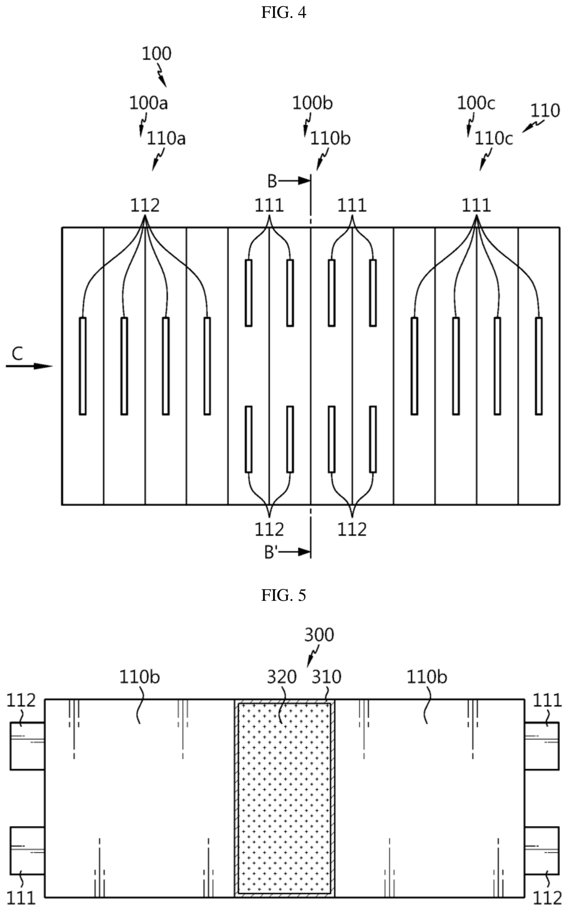

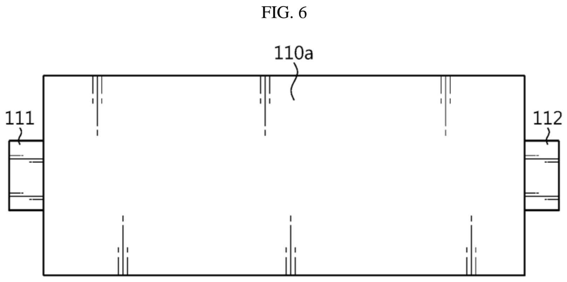

FIG. 2 is a schematic perspective view showing a battery module according to the first embodiment of the present disclosure, FIG. 3 is a top view showing only a battery cell in the battery module according to the first embodiment of the present disclosure, FIG. 4 is a front view showing only the battery cell in the battery module according to the first embodiment of the present disclosure, viewed along the A direction of FIG. 3, FIG. 5 is a cross-sectional view taken along the B-B' direction of FIG. 4, and FIG. 6 is a diagram viewed along the C direction of FIG. 4.

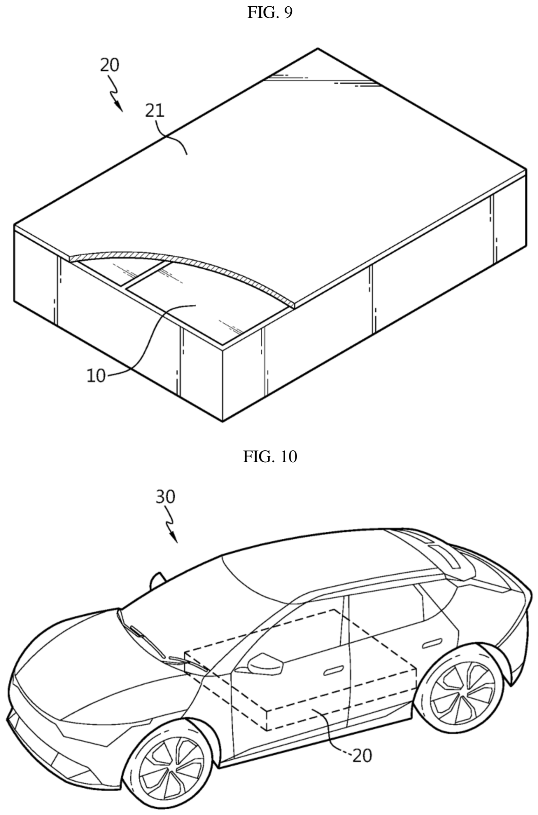

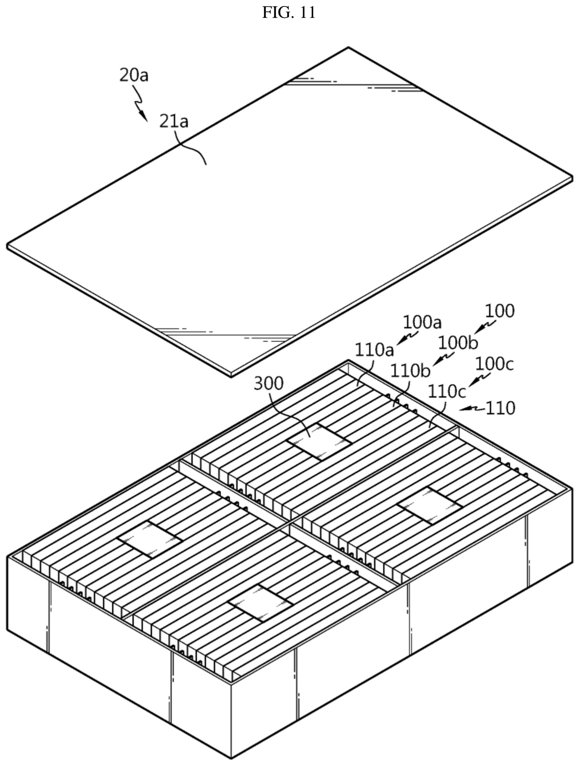

In one embodiment, the battery cell 110 may be accommodated in a case 200 of a battery module 10, and the battery module 10 in which the battery cell 110 is accommodated may be accommodated in a pack housing 21 (see FIG. 9) to form a battery pack 20. Alternatively, in another embodiment, the battery cell 110 may be directly accommodated in a pack housing 21a (see FIG. 11) of a battery pack 20a, as explained later.

Referring to FIG. 2, a battery module 10 according to an embodiment of the present disclosure includes a battery cell stack 100, a case 200, and a cooling member 300.

The battery cell stack 100 may be configured to stack a plurality of battery cells 110. The battery cells 110 may have various structures, and further, the plurality of battery cells 110 may be stacked in various ways.

The battery cell 110 may have a structure in which a plurality of unit cells, in each of which a positive electrode plate, a separator and a negative electrode plate are arranged in the order, or a plurality of bi-cells, in each of which a positive electrode plate, a separator, a negative electrode plate, a separator, a positive electrode plate, a separator and a negative electrode plate are arranged in the order, are stacked according to the battery capacity.

The battery cell 110 may be equipped with an electrode lead 111, 112 (see FIG. 3). The electrode lead 111, 112 is a type of terminal that is exposed to the outside and connected to an external device, and a conductive material may be used. The electrode lead 111, 112 may include a positive electrode lead 111 and a negative electrode lead. 112

Referring to FIG. 3, the first battery cell 110a, 110c has electrode leads 111 and 112 formed at both sides of the battery cell 110, respectively. That is, referring to FIGS. 4 and 6 together, the first battery cell 110a is configured such that the positive electrode lead 111 and the negative electrode lead 112 are positioned in opposite directions with respect to the longitudinal direction of the first battery cell 110a. In addition, the first battery cell 110c is also configured such that the positive electrode lead 111 and the negative electrode lead 112 are positioned in opposite directions with respect to the longitudinal direction of the first battery cell 110c.

In addition, referring to FIG. 4, the second battery cell 110b has both electrode leads 111 and 112 formed at one side of the battery cell 110. Referring to FIGS. 4 and 5 together, the second battery cell 110b is configured such that the positive electrode lead 111 and the negative electrode lead 112 are positioned in the same direction with respect to the longitudinal direction of the second battery cell 110b.

A plurality of battery cells 110 may be electrically connected via a bus bar (not shown). However, the bus bar is not shown in the drawings.

The battery cell stack 100 may be provided with a plurality of cartridges (not shown) that accommodate the battery cells 110. Each cartridge (not shown) may be manufactured by injection molding of plastic, and a plurality of cartridges (not shown) having an accommodation portion that accommodates the battery cells 110 may be stacked. A cartridge assembly in which a plurality of cartridges (not shown) are stacked may be provided with a connector element or a terminal element.

The connector element may include various types of electrical connection components or connecting members for connection to, for example, a BMS (Battery Management System, not shown) that may provide data on the voltage or temperature of the battery cell 110.

Also, the terminal element is a main terminal connected to the battery cell 110 and includes a positive electrode terminal and a negative electrode terminal. The terminal element is equipped with a terminal bolt so that the terminal element may be electrically connected to the outside. Meanwhile, the battery cell 110 may have various shapes.

Referring to FIG. 2, the battery cell stack 100 is accommodated in a case 200. The case 200 may include an upper case 210 and a lower case 220. Also, the case 200 surrounds the battery cells 110 and thereby protects the battery cells 110 from external vibrations or shocks.

The case 200 may include a mica plate made of mica having both thermal insulation and heat resistance to prevent flame leakage. Here, the mica plate may have not only a flat mica plate shape but also a shape in which flat and curved surfaces are mixed.

The case 200 may be formed in a shape corresponding to the shape of the battery cell stack 100. For example, if the battery cell stack 100 is formed in a hexahedral shape with a rectangular cross-section, the case 200 may also be formed in a hexahedral shape corresponding thereto.

The case 200 may be manufactured by, for example, bending a metal plate, whereby the case 200 may be manufactured in an integral form. If the case 200 is manufactured in an integral form, the coupling process may become easy and simple. Alternatively, the case 200 may be provided in a separate form and coupled by welding, etc. However, the material of the case 200 is not limited to a metal material.

The cooling member 300 is disposed between the plurality of battery cells 110. The cooling member 300 is provided to cool the flame and block flame propagation when a flame occurs in any of the battery cells 110.

Referring to FIG. 5, the cooling member 300 may include an accommodation portion 310 and a cooling material 320.

The accommodation portion 310 is configured to accommodate the cooling material 320 and to rupture at a preset temperature. The accommodation portion 310 may be configured in various ways, but may be made of, for example, a metal material having a preset thickness. The thickness of the metal material may vary depending on the type of the battery module 10, and may be formed thin enough to melt and rupture by a flame.

The cooling material 320 is accommodated in the accommodation portion 310. The cooling material 320 is configured to cool a flame generated from the battery cell 110. That is, the cooling material 320 is accommodated in the accommodation portion 310, and when the accommodation portion 310 is ruptured by a flame generated from the battery cell 110, the cooling material 320 comes out from the accommodation portion 310 and cools the flame.

The cooling material 320 may be diverse and may be liquid nitrogen capable of lowering the oxygen concentration and cooling and blocking the flame, but the type of cooling material 320 is not limited to liquid nitrogen.

In other words, the cooling material 320 may include various materials that may contact a high-temperature substance and transfer heat thereto to lower the temperature or block the provision of oxygen to remove the flame. For example, the cooling material 320 may be configured to include liquid nitrogen. That is, when a flame occurs in the battery cell 110, the accommodation portion 310 of the cooling member 300 is ruptured, and the cooling material 320, for example liquid nitrogen, inside the accommodation portion 310 is ejected to cool the battery cell 110.

Referring to FIG. 3, the battery cell stack 100 may include a first battery cell stack 100a, a second battery cell stack 100b, and a third battery cell stack 100c. Of course, more battery cell stacks 100 may be provided than the first battery cell stack 100a, the second battery cell stack 100b, and the third battery cell stack 100c, but for convenience of explanation, the description will focus on a case where the battery cell stack 100 includes the first battery cell stack 100a, the second battery cell stack 100b, and the third battery cell stack 100c.

Referring to FIG. 3, the first battery cell stack 100a includes a plurality of first battery cells 110a. In FIG. 3, the first battery cell stack 100a includes four first battery cells 110a, but is not limited thereto. As described above, the first battery cell 110a is a battery cell 110 having electrode leads 111 and 112 formed at both sides, respectively.

Also, the second battery cell stack 100b includes a plurality of second battery cells 110b. In FIG. 3, the second battery cell stack 100b includes four second battery cells 110b, but is not limited thereto. As described above, the second battery cell 110b is a battery cell 110 having both electrode leads 111 and 112 formed at one side. Here, the second battery cell stack 100b is arranged to be adjacent to the first battery cell stack 100a.

The third battery cell stack 100c includes a plurality of first battery cells 110c. In FIG. 3, the third battery cell stack 100c includes four first battery cells 110c, but is not limited thereto. As described above, the first battery cell 110c is a battery cell 110 having electrode leads 111 and 112 formed at both sides, respectively. Here, the third battery cell stack 100c is arranged to be adjacent to the second battery cell stack 100b.

In addition, referring to FIG. 3, the second battery cell 110b equipped in the second battery cell stack 100b may be arranged to have a shorter length (L2 < L1) than the first battery cells 110a, 100c. That is, the second battery cell 110b, which is shorter than the first battery cell 110a, 110c, is arranged to be symmetrical vertically (Y-direction symmetry) with respect to FIG. 3. At this time, a space 400 is formed between any second battery cell 110b and another second battery cell 110b, which are arranged to be symmetrical vertically in the length direction (Y-direction of FIG. 3).

Also, the cooling member 300 is disposed in the aforementioned space 400. That is, the cooling member 300 may be disposed between the plurality of second battery cells 110b of the second battery cell stack 100b.

In this way, if the cooling member 300 is disposed in the space 400 between the plurality of second battery cells 110b, even if a flame occurs in the first battery cell 110a of the first battery cell stack 100a or the first battery cell 110c of the third battery cell stack 100c, the flame propagation to other battery cells 110 is prevented by the cooling member 300 between the first battery cell stack 100a and the third battery cell stack 100c.

Accordingly, it is possible to block or extinguish a flame ignited in a battery cell 110, prevent a flame generated by ignition in a battery cell 110 from spreading to another neighboring battery cell 110, and prevent heat propagation between battery cells 110, thereby preventing a chain thermal runaway and improving the stability of the battery cells 110.

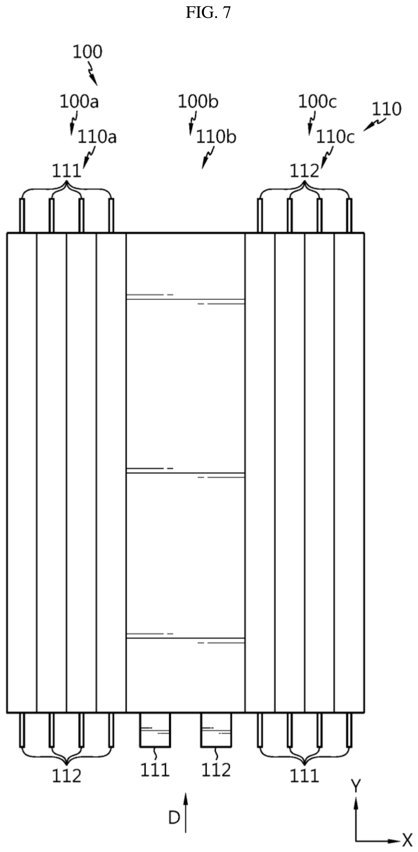

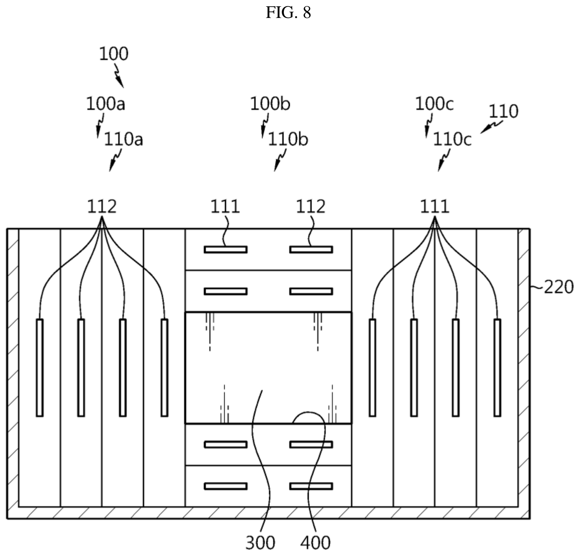

FIG. 7 is a top view showing only the battery cell in a battery module according to the second embodiment of the present disclosure, and FIG. 8 is a diagram viewed along the D direction of FIG. 7, in which a lower case is depicted.

The second embodiment of the present disclosure is fundamentally different from the first embodiment in terms of the arrangement of battery cells 110. However, the features of the second embodiment identical to the first embodiment among will not be described again. In addition, the features of the second embodiment that are applicable to the first embodiment may be applied to the first embodiment.

Referring to FIGS. 7 and 8, the plurality of first battery cells 110a provided in the first battery cell stack 100a and the plurality of second battery cells 110b provided in the second battery cell stack 100b are arranged in different directions. Here, the plurality of first battery cells 110c provided in the third battery cell stack 100c and the plurality of second battery cells 110b provided in the second battery cell stack 100b may also be arranged in different directions.

For example, referring to FIG. 8, the plurality of first battery cells 110a provided in the first battery cell stack 100a are arranged such that a narrow side among the sides thereof without electrode leads 111 and 112 is in contact with the lower case 220. Also, the plurality of second battery cells 110b provided in the second battery cell stack 100b are arranged such that a wide side among the sides thereof without electrode leads 111 and 112 faces toward the lower case 220. Also, the space 400 may be formed between any second battery cell 110b and another second battery cell 110b by this arrangement.

In addition, the cooling member 300 is disposed in the space 400 described above. That is, the cooling member 300 may be disposed between the plurality of second battery cells 110b of the second battery cell stack 100b.

If the cooling member 300 is disposed in the space 400 between the plurality of second battery cells 110b in this way, even if a flame occurs in the first battery cell 110a of the first battery cell stack 100a or the first battery cell 110c of the third battery cell stack 100c, the flame propagation to other battery cells 110 is prevented by the cooling member 300 between the first battery cell stack 100a and the third battery cell stack 100c.

FIG. 9 is a drawing schematically showing the configuration of a battery pack according to each embodiment of the present disclosure.

Referring to FIG. 9, a battery pack 20 according to an embodiment of the present disclosure includes one or more battery modules 10 according to each embodiment described above. In addition, the battery pack 20 may further include a pack housing 21 for accommodating the battery module 10, and various devices for controlling charging and discharging of the battery cells 110 accommodated in the battery module 10, such as a BMS, a current sensor, and a fuse.

Specifically, the battery pack 20 may include, for example, a battery management system (BMS) and a battery disconnect unit (BDU).

The battery management system is mounted in the pack housing 21 and controls the operation of the battery cell 110. The battery management system is provided per pack unit, rather than per module unit, and is configured to control, for example, the charge/discharge state, power state, and performance state of the battery cell 110 through pack voltage and pack current.

In addition, the battery disconnect unit controls the electrical connection of the battery cell 110 to manage the power capacity and function of the battery pack 20. For this purpose, the battery disconnect unit may include a power relay, a current sensor, a fuse, etc. In addition, the battery disconnect unit is also provided in a pack unit, rather than in a module unit.

FIG. 10 is a drawing for explaining a vehicle including the battery pack of FIG. 9.

Referring to FIG. 10, a vehicle 30 according to an embodiment of the present disclosure may include at least one battery module 10 or battery pack 20 according to each embodiment described above. Here, the vehicle 30 includes various vehicles that are designed to use electricity, such as an electric vehicle or a hybrid electric vehicle, for example.

FIG. 11 is a drawing schematically showing the configuration of a battery pack according to another embodiment of the present disclosure. In the case of FIG. 11, the battery cell stack 100 of the first embodiment illustrated in FIG. 2 is directly accommodated in the pack case 21a of the battery pack 20a without the case 200 of the battery module 10, but the case where the battery cell stack 100 of the second embodiment illustrated in FIG. 7 is directly accommodated in the pack case 21a of the battery pack 20a without the case 200 of the battery module 10 is also included in the scope of rights according to the embodiment of the present disclosure.

Referring to FIG. 11, a battery pack 20a according to another embodiment of the present disclosure includes a battery cell stack 100, a pack housing 21a, and a cooling member 300.

The features of the battery cell stack 100, the features of the cooling member 300, and the features of the battery cell 110 including the first battery cell 110a, 110c having electrode leads 111 and 112 respectively formed at both sides thereof and the second battery cell 110b having both electrode leads 111 and 112 formed at one side thereof are already described in relation to the battery module 10, and therefore will not be described again.

The battery cell stack 100 is accommodated in the pack housing 21a. Here, referring to FIG. 11, the battery cell stack 100 may be directly accommodated in the pack housing 21a of the battery pack 20a without the case 200 of the battery module 100. According to this method, since more battery cells 110 may be accommodated in the space occupied by the case 200 of the battery module 100 inside the battery pack 20a, space efficiency is increased and battery capacity is improved. In addition, since the case 200 of the battery module 100 is removed, there is also an effect of reducing weight and volume.

A cell cover supporting the battery cell 110 may be provided so that the battery cell 110 may be directly accommodated in the pack housing 21a. However, the cell cover is optional, and the battery cell 110 may be directly accommodated in the pack housing 21a without the cell cover.

Here, if a cell cover is provided, the cell cover may be configured to surround at least some battery cells 110 among the plurality of battery cells 110. For example, the cell cover may be configured to at least partially surround one, two, or three battery cells 110. However, the number of battery cells 110 is only one embodiment and is not limited thereto.

Here, the cell cover may be configured to partially surround the battery cell 110 so that at least one side of the battery cell 110 surrounded by the cell cover is exposed to the outside.

The cell cover may be configured to support the battery cell 110 accommodated therein. In particular, the cell cover may be configured to stably support the erected state of the battery cell 110 accommodated therein.

Specifically, the cell cover may be configured to support, for example, a pouch-type battery cell 110 in an upright state. Generally, it is not easy to stack pouch-type battery cells 110 in an upright state in the vertical direction.

However, the cell cover may surround one or more pouch-type battery cells 110 and support the pouch-type battery cells 110 to maintain the upright state, i.e., the standing state, of the encased battery cells 110.

Meanwhile, the battery pack 20a may further include a pack housing 21a for accommodating the battery cells 110, and various devices for controlling charging and discharging of the battery cells 110, such as a BMS, a current sensor, and a fuse.

Specifically, the battery pack 20a may include, for example, a battery management system (BMS) and a battery disconnect unit (BDU).

The battery management system is mounted in the pack housing 21a and controls the operation of the battery cell 110. The battery management system is provided per pack unit, rather than per module unit, and is configured to control, for example, the charge/discharge state, power state, and performance state of the battery cell 110 through pack voltage and pack current.

In addition, the battery disconnect unit controls the electrical connection of the battery cell 110 to manage the power capacity and function of the battery pack 20a. For this purpose, the battery disconnect unit may include a power relay, a current sensor, a fuse, etc. In addition, the battery disconnect unit is also provided in a pack unit, rather than in a module unit.

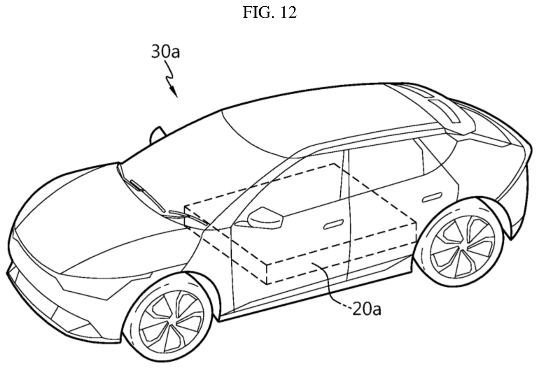

FIG. 12 is a drawing for explaining a vehicle including the battery pack of FIG. 11.

Referring to FIG. 12, a vehicle 30a according to one embodiment of the present disclosure may include at least one battery pack 20a according to each embodiment described above. In the battery pack 20a, the battery cell stack 100 is directly accommodated in a pack housing 21a of the battery pack 20a without a battery module.

Here, the vehicle 30a includes various vehicles that are designed to use electricity, such as an electric vehicle or a hybrid electric vehicle.

When the terms indicating directions as used herein such as upper, lower, left, and right are used for convenience of description only, these terms are just for convenience of explanation, and it is obvious to those skilled in the art that the terms may change depending on the position of the stated element or an observer.

The present disclosure has been described in detail. However, it should be understood that the detailed description and specific examples, while indicating preferred embodiments of the disclosure, are given by way of illustration only, since various changes and modifications within the scope of the disclosure will become apparent to those skilled in the art from this detailed description. Therefore, the previously disclosed embodiments should be considered from an explanatory perspective rather than a limiting perspective. In other words, the scope of the true technical idea of the present disclosure is shown in the claims, and all differences within the scope of equivalence should be interpreted as being included in the present disclosure.

### INDUSTRIAL APPLICABILITY

The present disclosure relates to a battery module, and a battery pack and a vehicle including the same, and is particularly applicable to industries related to secondary batteries.

## Claims

1. A battery module comprising:
a battery cell stack in which a plurality of battery cells are stacked;
a case in which the battery cell stack is accommodated; and
a cooling member disposed between the plurality of battery cells,
wherein the battery cells include a first battery cell having electrode leads respectively formed at both sides thereof, and a second battery cell having both electrode leads formed at one side thereof.

2. The battery module according to claim 1,
wherein the battery cell stack includes:
a first battery cell stack having a plurality of first battery cells stacked therein;
a second battery cell stack arranged adjacent to the first battery cell stack and having a plurality of second battery cells stacked therein; and
a third battery cell stack arranged adjacent to the second battery cell stack and having a plurality of first battery cells stacked therein.

3. The battery module according to claim 2,
wherein the cooling member is disposed between the plurality of second battery cells of the second battery cell stack.

4. The battery module according to claim 3,
wherein the second battery cell provided in the second battery cell stack is shorter than the first battery cell.

5. The battery module according to claim 4,
wherein a space is formed between any second battery cell and another second battery cell.

6. The battery module according to claim 5,
wherein the cooling member is disposed in the space.

7. The battery module according to claim 1,
wherein the cooling member includes:
an accommodation portion configured to rupture at a preset temperature; and
a cooling material accommodated in the accommodation portion.

8. The battery module according to claim 7,
wherein the accommodation portion is made of a metal material having a preset thickness.

9. The battery module according to claim 7,
wherein the cooling material is liquid nitrogen.

10. The battery module according to claim 2,
wherein the plurality of first battery cells provided in the first battery cell stack and the plurality of second battery cells provided in the second battery cell stack are arranged in different directions.

11. The battery module according to claim 10,
wherein the case includes a lower case,
wherein the plurality of first battery cells are arranged so that a narrow side thereof among sides without electrode leads is in contact with the lower case, and
wherein the plurality of second battery cells are arranged so that a wide side thereof among the sides without electrode leads faces the lower case.

12. The battery module according to claim 10,
wherein a space is formed between any second battery cell and another second battery cell.

13. The battery module according to claim 12,
wherein the cooling member is disposed in the space.

14. A battery pack comprising at least one battery module according to any one of claims 1 to 13.

15. A vehicle comprising at least one battery module according to any one of claims 1 to 13.

16. A battery pack comprising:
a battery cell stack in which a plurality of battery cells are stacked;
a pack housing in which the battery cell stack is accommodated; and
a cooling member disposed between the plurality of battery cells,
wherein the battery cells include a first battery cell having electrode leads respectively formed at both sides thereof, and a second battery cell having both electrode leads formed at one side thereof.

17. A vehicle comprising at least one battery pack according to claim 16.
